# EUROPEAN PATENT APPLICATION

(11) **EP 2 015 132 A1**
(43) Date of publication of application: **14.01.2009**
(21) Application number: 08011805.2
(22) Date of filing: 30.06.2008
(51) Int. Cl.: G02F 1/13, G06F 1/16, H04M 1/02

(54) **Portable electronic device**

(30) Priority: 10.07.2007 JP 2007180917
(71) Applicant: Funai Electric Co., Ltd., Osaka 574-0013 (JP)
(72) Inventor: Kobayashi, Tomohiro, Osaka 574-0013 (JP)
(74) Representative: Grünecker, Kinkeldey, Stockmair & Schwanhäusser Anwaltssozietät

(57) **Abstract**

Disclosed is a portable electronic device including:
a display; a display holder for holding the display interiorly, the display holder being in the shape of a rectangle; and
a housing for housing the display and the display holder in an internal space thereof, the housing being composed of an upper frame for holding the display holder and a lower frame to be fitted with the upper frame, the upper frame being in the shape of a rectangle and includes an opening for exposing the display outward; wherein the upper frame further includes a first portion shaped in concave/convex style in at least one end portion of the opening on an inner surface thereof, the end portion being arranged in longitudinal side along a short side of the upper frame, and the display holder includes a second portion shaped to be fitted with the first portion.

## Description

### BACKGROUND OF THE INVENTION

### 1. Field of the Invention

The present invention relates to a portable electronic device, in particular, to a portable electronic device having display such as a liquid crystal display.

### 2. Related Art

Recently, in an area of a portable electronic device such as a cell-phone or a portable media player, it is required that a display such as a Liquid Crystal Display (LCD) to be enlarged in size, while a housing of the portable electronic device to be downsized or reduced the thickness thereof. To make the LCD externally be visible, an opening has to be formed on the housing. Therefore, strength of the housing becomes extremely decreased because of downsizing of the housing and growing in size of the LCD. However, the strength of the housing must be ensured even though the above described requirements need to be fulfilled.

Here, for example, a protection structure of an LCD panel is known as a housing structure of a portable electronic device. In this protection structure, a horseshoe-shaped elastic section is arranged between a holding section, which includes an LCD holder for holding the LCD panel, and an external packaging. The LCD holder is composed of a metal plate or the like. Then, the LCD holder having the elastic section is assembled to the external packaging (see Japanese Patent Application Laid-Open Publication No. 2004-251938).

Moreover, an LCD holding structure is known, wherein a fixed projection for holding a main printed board from both sides is arranged to an LCD holder along a longitudinal direction thereof, and an inner wall rib to be attached to an outside of the fixed projection is arranged on an upper frame along a longitudinal direction thereof. Then, when assembling the LCD holder to the upper frame, the LCD holder is attached to the upper frame, with the main printed board being held from both sides by the fixed projection, and the inner wall rib on the inner side of the upper frame is facially contact with the fixed projection of the LCD holder along a longitudinal direction of the upper frame, by the upper frame being attached downwardly (see Japanese Patent Application Laid-Open Publication No. 2002-287116). Moreover, a holding structure for holding the liquid crystal element of a cell-phone is known, wherein a holder for holding an LCD has pins thereon, and a printed board has holes to be fitted with the pins, so as to fix the printed board to the holder (see Japanese Patent Application Laid-Open Publication No. 2001-272660).

Furthermore, a portable terminal device is known, wherein a liquid crystal holder is to be held between a front case and a rear case of the portable terminal device, by interpositionning an elastic member between a liquid crystal holder and a front case, with pressing an area excluding a portion occupied by the liquid crystal display among the rear case side of the liquid crystal holder to the front case side (see Japanese Patent Application Laid-Open Publication No. 2007-36905). Moreover, a cell-phone is known, wherein a rear cover of which is fixed to an intermediate chassis (LCD holder) by a center screw through a through hole formed in the center of the rear case (see Japanese Patent Application Laid-Open Publication No. 2001-284854).

However, the housing structure of the portable electronic device described in Japanese Patent Application Laid-Open Publication No. 2002-287116 has a problem that a circuit built in the printed board is likely to be broken down, because a shock applied from a width direction of the housing, which is composed of an upper case and a lower case, is absorbed by the main printed board or the LCD board, each of them is held inside the housing. Moreover, the housing structure of a small portable device disclosed in Japanese Patent Application Laid-Open Publication No. 2004-251938 is mainly intended to improve strength of the portable electronic device against a lengthwise direction (longitudinal direction) thereof, and the housing structure of a small portable device disclosed in Japanese Patent Application Laid-Open Publication No. 2002-287116, No. 2001-272660 and No. 2007-36905 is mainly intended to improve strength of the portable electronic device against a thickness direction thereof. Therefore, strength against a width direction (crosswise direction) of the portable electric device can not be improved.

### SUMMARY OF THE INVENTION

The present invention was made with a view to downsize a housing without losing strength thereof, and grow in size of a display in an area of portable electronic device.

According to a first aspect of the present invention, there is provided a portable electronic device including:
a display; a display holder for holding the display interiorly, the display holder being in the shape of a rectangle; and a housing for housing the display and the display holder in an internal space thereof, the housing being composed of an upper frame for holding the display holder and a lower frame to be fitted with the upper frame, the upper frame being in the shape of a rectangle and includes an opening for exposing the display outward; wherein the upper frame further includes a first portion shaped in concave/convex style in at least one end portion of the opening on an inner surface thereof, the end portion being arranged in longitudinal side along a short side of the upper frame, and the display holder includes a second portion shaped to be fitted with the first portion.

According to a present invention, the second portion formed on the display holder is attached to the first portion formed on the upper frame so as to both portions being fitted with each other, when the display and the display holder being housed into the internal space of the housing that is composed of the upper frame and the lower frame. Therefore, the display holder and the upper frame are integrally attached with each other without moving over in a longitudinal direction or a width direction of the upper frame.
Consequently, the strength of the portable electronic device against an external force such as a shock or a pressure applied from the longitudinal direction or the width direction of the portable electronic device can be strengthened by strength of the display holder.

Here, the upper frame is formed in the shape of a rectangle in a planar view, the display holder is formed in the shape of a rectangle, and the second portion of the display holder is arranged in at least one end portion of the longitudinal sides, which corresponds to the longitudinal sides of the upper frame if the display holder is attached to the upper frame. Therefore, the strength of the portable electronic device against a right angle direction to the longitudinal direction of the upper frame, which is width direction of the housing composed of the upper frame and the lower frame, can be improved, by fitting the second portion of the display holder with the first portion of the upper frame. Therefore, the strength of the portable electronic device can be improved especially against a width direction thereof. Accordingly, the display can be effectively prevented from being broken down by an external force applied to the display when, for example, the portable electronic device is dropped. Consequently, the housing of the portable electronic device can be downsized and the display can be enlarged without losing the strength of the housing of the portable electronic device.

### BRIEF DESCRIPTION OF THE DRAWINGS

The above and other objects, advantage and features of the present invention will become more fully understood from the detailed description given hereinbelow and the appended drawings which are given by way of illustration only, and thus are not intended as a definition of the limits of the present invention, and wherein:
FIG. 1 is a perspective view showing an entirely structure of a remote controller of an embodiment of the present invention;
FIG. 2 is an exploded perspective view showing an entirely structure of a remote controller of an embodiment of the present invention;
FIG. 3 is a perspective view showing a substantial structure of an upper frame of an embodiment of the present invention;
FIG. 4 is a perspective view showing a substantial structure of an LCD holder of an embodiment of the present invention;
FIG. 5 is a perspective view showing an LCD holder attached to an upper frame of an embodiment of the present invention;
FIG. 6 is an explanatory diagram showing a result of strength analysis of part A shown in FIG. 5;
FIG. 7 is a schematic view showing a result of strength analysis of part A shown in FIG. 5; and
FIG. 8 is a schematic view showing a result of strength analysis of a traditional remote controller.

### DETAILED DESCRIPTION OF THE PREFERRED EMBODIMENTS

In the following, an embodiment of the present invention will be described with reference to the attached drawings.

In this embodiment, a multi remote controller 1 for remote controlling a predetermined electronic device (not shown) will be explained as a portable electronic device. The multi remote controller 1 includes a liquid crystal display 30 as a display, and a control section 11.

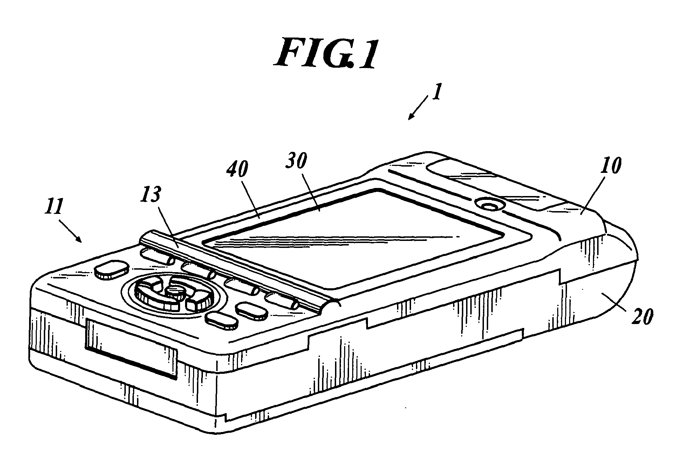

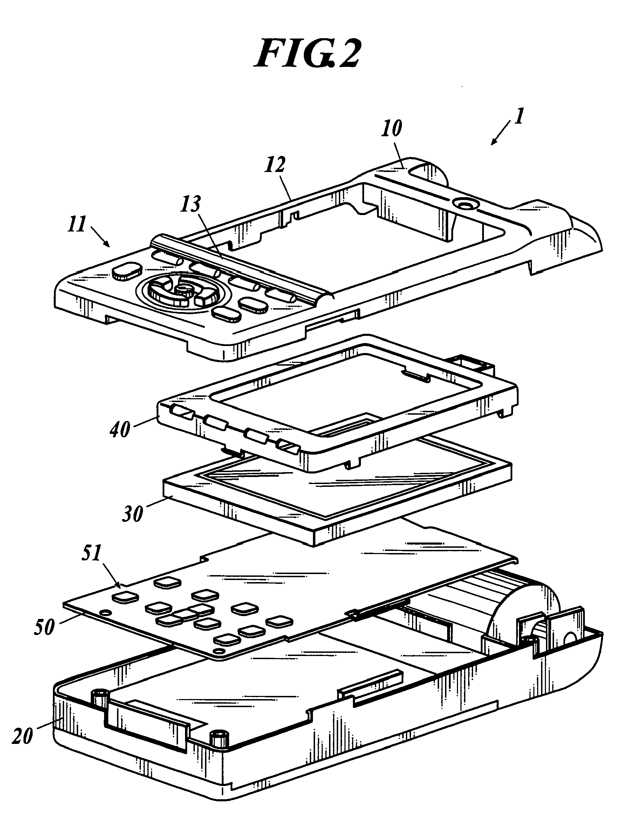

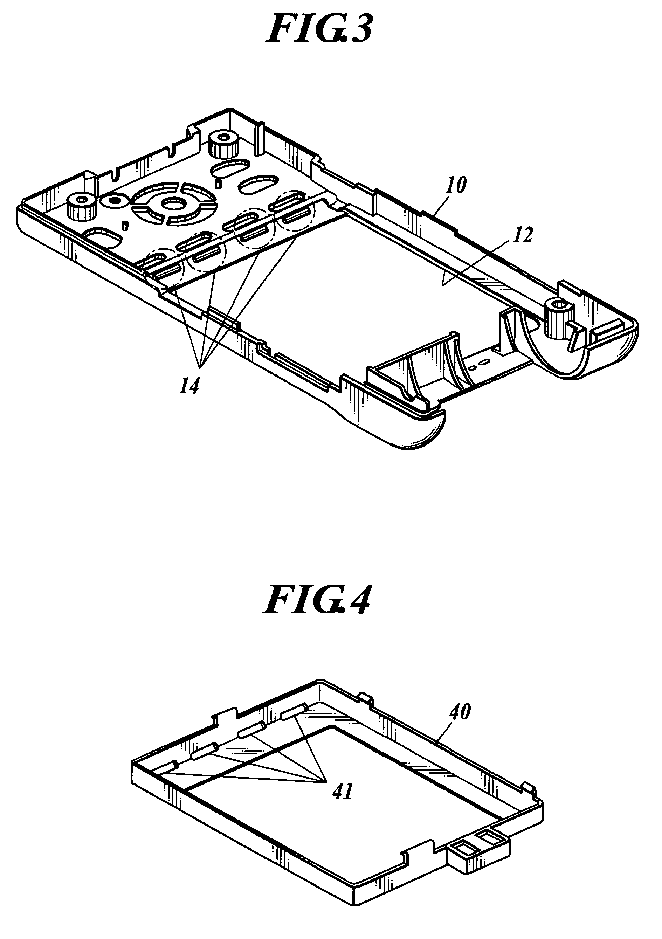

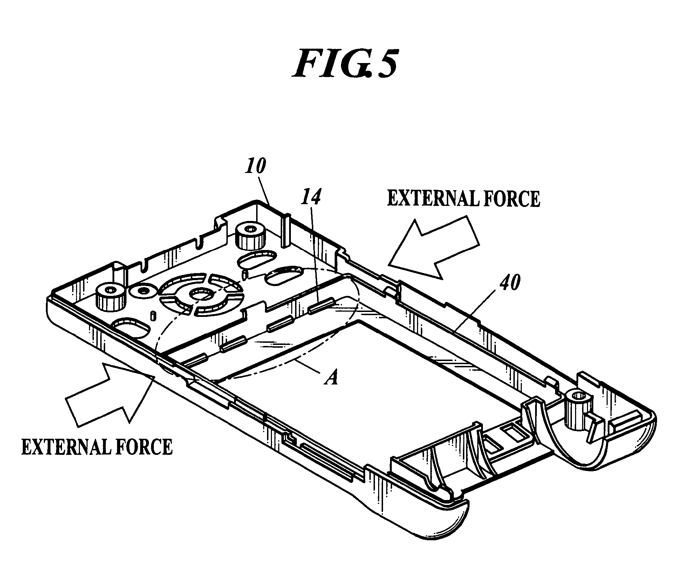

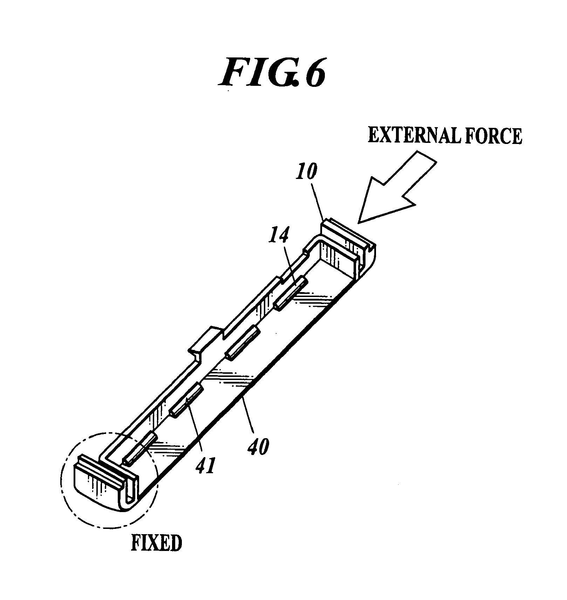

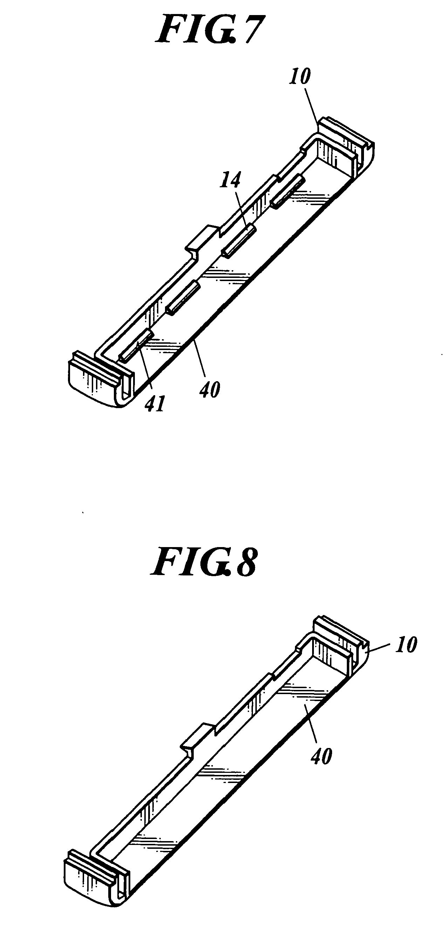

FIG. 1 is a perspective view showing an entirely structure of a remote controller of an embodiment of the present invention; FIG. 2 is an exploded perspective view showing an entirely structure of a remote controller of an embodiment of the present invention; FIG. 3 is a perspective view showing a substantial structure of an upper frame of an embodiment of the present invention; FIG. 4 is a perspective view showing a substantial structure of an LCD holder of an embodiment of the present invention; FIG. 5 is a perspective view showing an LCD holder attached to an upper frame of an embodiment of the present invention; FIG. 6 is an explanatory diagram showing a result of strength analysis of part A shown in FIG. 5; FIG. 7 is a schematic view showing a result of strength analysis of part A shown in FIG. 5; and FIG. 8 is a schematic view showing a result of strength analysis of a traditional remote controller.

As shown in FIG. 1, the multi remote controller 1 includes a Liquid crystal Display (LCD) 30 as a display, an LCD holder 40 as a display holder for holding the LCD 30, the LCD holder 40 being consist of a metal plate, an upper frame 10 for holding the LCD holder 40, the upper frame includes an opening 12 for exposing the LCD 30 to an outside of the multi remote controller 1, a printed board 50 having an electronic circuit for displaying an image on the LCD 30, and a lower frame 20 for holding the LCD 30, the LCD holder 40 and the printed board 50 by fitting with the upper frame 10.

First of all, a structure of a housing formed by an upper frame 10 and a lower frame 20 will be explained in detail with reference to Figs. 1 to 3.

As shown in Figs. 1 and 2, the upper frame 10 is formed in almost a rectangle shape in a planar view and composed of, for example, such as an injection-molded thermoplastic resin or the like. An operation section 11 having a plurality of operation keys is arranged in one longitudinal end side of the rectangle shaped upper frame 10. An opening 12 for exposing the LCD 30 to an outside of the housing is arranged in another longitudinal end side of the upper frame 10.

Moreover, a bulging section 13 that bulges out from an external surface of the upper frame 10 is formed on the upper frame 10, extending along an edge portion of the opening 12 in a width direction thereof. The thickness of the bulging section 13 from the external surface of the upper frame 10 is thicker than that of the operation keys. The bulging section 13 extends throughout a width direction of the upper frame 10 on an external surface thereof.

According to the above mentioned structure, the bulging section 13 has a function, for example, to prevent the operation keys from accidentally being held down if the remote controller 1 is put upside down, with a side of the upper frame 10 meets on top surface to put the remote controller 1 on, or a function to prevent an external surface of the upper frame 10 excluding the bulging section 13 or a surface of the LCD 30, which is exposed to an outside from the opening 12, from being damaged.

Furthermore, in the present embodiment, a plurality of convex portions 14 is formed on an inner side of the upper frame 10 at where the point corresponds to behind the bulging section 13. The convex portions 14 are fit to following concave portions 41 formed on the LCD holder 40 as a second portion. Specifically, in the present embodiment, for example, as shown in Fig. 3, four convex portions 14 are formed on each end portions of the opening 12 in longitudinal sides of the upper frame 10. Each convex portion 14 is formed in a rectangle shape being arranged at predetermined intervals along a width direction of the upper frame 10, with being at right angle to the longitudinal direction of the upper frame 40. The convex portions 14 are projected to an inner side of the upper frame 10. Arranged on the back of the bulging section 13 is a stepped portion (concave portion) that shallowly dents. The convex portions 14 are formed like being supported by two faces of a bottom surface and a side surface of the stepped portion. Incidentally, although Fig. 3 shows only four convex portions 14 arranged in one end portion of the opening 12, the end portion being closer to the operation section 11, another four convex portions 14 may also be formed on another end portion (an end portion of the opening 12 in far side from the operation section 11) of the opening 12 in longitudinal sides along a short side of the upper frame 10.

As shown in Figs. 1 and 2, the lower frame 20, as well as the upper frame 10, is formed in almost a rectangle shape in a planar view and composed of, for example, such as an injection-molded thermoplastic resin or the like. Then, a flat boxy housing is formed by fitting the upper frame 10 with the lower frame 20 with screws or the like (not shown) so as to, for example, fit longitudinal ends of the upper frame 10 to longitudinal ends of the lower frame 20 (see Fig. 1). The LCD 30, the LCD holder 40 and the printed board 50 are housed in an internal space of the flat boxy housing formed by the upper frame 10 and the lower frame 20.

The LCD 30 is a liquid crystal display composed of a glass substrate (not shown), a plate that faces to the glass substrate, and two deflecting plates, wherein a liquid crystal layer is enclosed between the plates, and a backlight is arranged on back side of them. The LCD 30 is formed in almost a rectangle shape in a planar view, barely being larger than the opening 12. The LCD 30 is held by the printed board 50 through the following LCD holder 40. Then, a display section of the LCD 30 is exposed out of the opening 12 with the LCD 30 being housed in an internal space of the housing formed by the upper frame 10 and the lower frame 20.

As shown in Fig. 2, the printed board 50 is, for example, housed in the housing in closer side to the lower frame 20. An LCD 30 being held by the LCD holder 40 is attached to the printed board 50. A plurality of push buttons 51, which output an electric signal according to an operation input from the operation section 11, is built into the printed board 50. Various electronic circuits or a controller or the like for displaying an image on the LCD 30 according to an electric signal output from the push buttons 51, and for outputting an optical signal for operating an electric device are also built into the printed board 50.

Here, a fitting structure of the upper frame 10 and the LCD holder 40 in the present embodiment will be described in detail.

As shown in Figs. 2 and 4, the LCD holder 40 is, for example, composed of a metal plate, being formed in a rectangle shape, and having a plurality of concave portions (holes) 41 as a second portion in one end portion thereof.

Specifically, the LCD holder 40 includes four concave portions 41 in each end of the LCD holder 40; the each end corresponds to the longitudinal ends of the upper frame 10 if the LCD holder 40 is attached to the upper frame 10. The concave portions 41 are formed as second portion to be fitted with a plurality of convex portions 14 formed as a first portion on the upper frame 10.

Each of the concave portions 41 is formed by notching (cutting out) a corner of each end, the end being correspond to the longitudinal end of the upper frame 10 if the LCD holder 40 is attached to the upper frame 10, to penetrate the LCD holder 40 at predetermined intervals along a width direction of the upper frame 10. That is, each of the concave portions 41 is arranged at predetermined intervals along a width direction of the upper frame 10, so as to coincide with the convex portions 14 arranged on an inner surface of the upper frame 10, when attached to the upper frame 10.

Then, in the present embodiment, the concave portions 41 (second portions) and the convex portions 14 (first portions) are attached with each other to be coincided, when fitting the upper frame 10 with the lower frame 20 to form the housing with the LCD 30, the LCD holder 40 and the printed board 50 being housed in the internal space of the housing (see for example Fig. 5). Then, on condition that each of the concave portions 41 and the convex portions 14 is coincided with each other, that is, on condition that the remote controller 1 is assembled, the upper frame 10 and the LCD holder 40 are integrally configured with each other without moving over from front to back and from side to side (i.e. to a direction at right angle to a thickness direction of the remote controller 1).

Next, an operation of the remote controller 1 will be explained with reference to Figs. 5 to 7.

As shown in Fig. 5, for example, assume that an external force is applied to a fitting portion A of the concave portions 41 and the convex portions 14 along a width direction at right angle to the longitudinal direction of the remote controller 1, on condition that the LCD holder 40 is attached to the upper frame 10 with the concave portions 41 being fitted into the convex portions 14.

For example, according to an analysis of the present inventor, an amount of displacement of the fitting portion A along a width direction of the upper frame 10 is about 22% in comparison with a traditional upper frame (see for example Fig. 8) that is analyzed as not being coincided with the LCD holder 40 through the concave portions 41 and the convex portions 14, while the upper frame 10 and the LCD holder 40 is analyzed by assuming that both are formed integrally with each other through the concave portions 41 and the convex portions 14.

Specifically, according to the result of the analysis, for example, if an external force of 3[N] is applied to the fitting portion A in the direction of an arrow shown in Fig. 6, a displacement of the upper frame 10 shown in Fig. 7, assumed to be integral with the LCD holder 40, is result in 0. 287 [mm] , while a displacement of the upper frame shown in Fig. 8, assumed not to be integral with the LCD holder 40, is result in 1.322 [mm].

That is, the strength of the upper frame 10 composed of such as a thermoplastic resin is strengthened by the LCD holder 40 composed of a metal plate, by fitting the concave portions 41 with the convex portions 14. Moreover, the strength of the remote controller 1 against a width direction is improved by the most simplest structure, because the convex portions 14 are formed, in this embodiment, on (an inner surface side of) the bulging section 13 of the upper frame 10, and the LCD holder 40 is fitted with the inner surface side of the bulging section 13 at where the strength to the width direction is one of the most strongest of the frame (LCD holder 40).

According to the above described remote controller 1 (a portable electric device) of an embodiment of the present invention, the remote controller 1 can be assembled with the concave portions 41 of the LCD holder 40 being fitted with the convex portions 14 of the upper frame 10, when the LCD 30 and the LCD holder 40 are housed in an internal space of the housing that is composed of the upper frame 10 and the lower frame 20. Therefore, the LCD holder 40 and the upper frame 10 are formed integrally with each other without moving over in a longitudinal direction or a width direction of the upper frame 10. Consequently, for example, the strength of the upper frame 10 against an external force such as a shock or a pressure applied from a longitudinal direction or a width direction of the remote controller 1 can be strengthened by strength of the LCD holder 40.

Moreover, the upper frame 10 is formed in a rectangle shape in a planar view, the LCD holder 40 is formed in a rectangle shape, and the concave portions 41 of the LCD holder 40 are arranged in the end portion, which corresponds to the longitudinal end of the upper frame 10 if the LCD holder 40 is attached to the upper frame 10. The strength of the remote controller 1 against a rectangle direction to the longitudinal direction of the upper frame 10, that is width direction of the housing composed of the upper frame 10 and the lower frame 20 can be improved, by fitting the concave portions 41 of the LCD holder 40 with the convex portions 14 of the upper frame 10. Therefore, the strength of the remote controller 1 can be improved especially in a width direction thereof. Accordingly, the LCD 30 can be effectively prevented from being broken down by an external force applied to the LCD 30 when the remote controller 1 is dropped. Consequently, the housing of the remote controller 1 (portable electronic device) can be downsized and the LCD 30 (display) can be enlarged without losing the strength of the housing of the remote controller 1.

Moreover, in the present embodiment, the LCD holder 40 includes concave portions 41 on both end of the longitudinal direction of the upper frame 10, when the LCD holder 40 is attached to the upper frame 10, and convex portions 14 to be fitted with the concave portions 41 on both end of the longitudinal direction of the upper frame 10, the convex portions 14 being formed in the opening 12 on an inner surface of the upper frame 10. Consequently, the strength of the upper frame 10 in a width direction is further improved, in comparison with the case that the concave portions 41 and the convex portions 14 are formed only in any one end of the longitudinal direction of the upper frame 10.

Moreover, by forming the convex portions 14 as a first portion on the stepped portion, which is behind the bulging section 13 of the upper frame 10, a flux of resins during injection-molding the upper frame 10 can be stabilized. Moreover, the bulging section 13 has a lot of flexibility during manufactured in thickness direction, the thickness of the bulging section 13 can be arranged as predetermined height. Furthermore, the concave portions 41 and the convex portions 14 can be fitted with each other, by forming the convex portions 14 on the stepped portion behind the bulging section 13 and forming the concave portions 41 by notching the corner of the end of the LCD holder 40. Consequently, the strength of the remote controller 1 can be improved without enlarging a longitudinal size thereof in comparison with the traditional remote controller.

Incidentally, in the present embodiment, the concave portions 41 and the convex portions 14 are formed in almost a rectangle shape being long in right angle to the longitudinal direction of the upper frame 10 that is width direction of the upper frame 10. However, the concave portions 41 and the convex portions 14 are not limited to the above described shape but can be formed in various forms such as a cylindrically shaped form or a polygon shaped form. This achieves the same result.

Moreover, the concave portions 41 and the convex portions 14 may be formed in at least any one end in a longitudinal direction of the upper frame 10. This also achieves the same result for improving the strength of the upper frame 10 in width direction.

Moreover, the concave portions 41 and the convex portions 14 may be arranged oppositely with each other. That is, for example, in the above mentioned embodiment, the convex portions 14 of the upper frame 10 may be formed in concave portions, and the concave portions 41 of the LCD holder 40 may be formed in convex portions that can be fitted with the concave portions formed on the upper frame 10. This achieves the same result as the above described embodiment.

## Claims

1. A portable electronic device, comprising:
a display;
a display holder for holding the display interiorly, the display holder being in the shape of a rectangle; and
a housing for housing the display and the display holder in an internal space thereof, the housing being composed of an upper frame for holding the display holder and a lower frame to be fitted with the upper frame, the upper frame being in the shape of a rectangle and includes an opening for exposing the display outward; wherein
the upper frame further includes a first portion shaped in concave/convex style in at least one end portion of the opening on an inner surface thereof, the end portion being arranged in longitudinal side along a short side of the upper frame, and
the display holder includes a second portion shaped to be fitted with the first portion.

2. The portable electronic device according to claim 1, including a plurality of the first portions and the second portions.

3. The portable electronic device according to claim 2, wherein
the upper frame further includes a bulging section that bulges out from an external surface thereof and extends along an end portion of the opening along a width direction of the upper frame, and
the bulging section includes a convex portion as the first portion.

4. The portable electronic device according to claim 3, wherein the second portion is arranged in both ends of the display holder, the ends correspond to the longitudinal ends of the upper frame.

5. A portable electronic device, comprising;
a display;
a display holder for holding the display interiorly, the display holder being in the shape of a rectangle and composed of a metal plate;
a housing for housing the display and the display holder in an internal space thereof, the housing being composed of an upper frame for holding the display holder and a lower frame to be fitted with the upper frame, the upper frame being in the shape of a rectangle and includes an opening for exposing the display outward; wherein
the upper frame further includes convex portions on an inner surface thereof, and
the display holder includes concave portions to be fitted with the convex portions in both ends thereof, the ends correspond to longitudinal ends of the upper frame.
